# EUROPEAN PATENT SPECIFICATION

(11) **EP 0 261 750 B1**
(45) Date of publication and mention of the grant of the patent: **28.07.1993**
(21) Application number: 87300625.8
(22) Date of filing: 26.01.1987
(51) Int. Cl.: A45D 33/26, A45D 40/22, A45D 33/22

(54) **Cosmetic case and applicator**
Behälter für Schminke und Aufträger
Etui à cosmétique et applicateur

(30) Priority: 26.09.1986 US 911693
(43) Date of publication of application: 30.03.1988
(73) Proprietor: Joh. A. Benckiser GmbH, D-67059 Ludwigshafen (DE)
(72) Inventor: Sarica, Dominick Anthony, Kenilworth New Jersey (US)
(74) Representative: Watkins, Arnold Jack

(56) References cited:
- FR-A- 1 020 647
- FR-A- 1 281 866
- US-A- 2 180 404

## Description

The present invention is in the field of cosmetic packaging. In particular it is concerned with a portable cosmetic case having an applicator included.

The prior art contains several such cases. For example, U.S. Design Patent 281,731 shows a cosmetic case having a drawer and having a special niche for holding an applicator brush.

U.S. 4,337,859 shows a case containing caked powder which has a special shallow recess to receive an applicator.

U.S. 4,421,127 shows a multicompartmetal compact case with interchangeable cosmetic containers such as lipsticks and compacted powder and having a painting brush inserted in the case.

U.S. 4,555,020 shows a compact which holds numerous articles in frictionally engaged side compartments. The handles of the side compartments are specially shaped to prevent rotational movement.

U.S. 4,579,133 shows a cosmetic compact with an extendible applicator.

U.S. 2180404 describes a cosmetics container having a rotatable lid and an applicator supported by a handle of the container.

FR 1281866 describes a cosmetics container having a mounting for lipstick or the like which locks the container closed.

The present invention comprises, in combination, a container and an applicator consisting of a brush or a sponge for dispensing the contents of the container and a handle,
the container being substantially rectangular and comprising top and bottom congruent components, said components being hinged along one side;
the container being divided into a pair of rectangular compartments by a wall transverse to said hinged side, the first compartment forming a closed compartment for containing a substance to be dispensed by the applicator, the second compartment being open at its end opposite said transverse wall and said components being lockingly engaged to each other by a friction catch on the inside of the side opposite the hinged side or on said wall;
the applicator being substantially rectangular and dimensioned to fit snugly within said second compartment with said brush or sponge confined completely within the second compartment and said handle being partially confined within the second compartment and having a portion extending outwardly from said open end;
whereby rotation of said handle relative to the container will urge the top and bottom components apart and release the catch to open the container.

The combination wherein the container has a mirrored surface is preferred as is the combination wherein the substance is a personal care product such as blusher or compressed powder. The combination wherein the applicator handle has an indentation and the second compartment has a raised ridge designed to engage the indentation is also preferred.

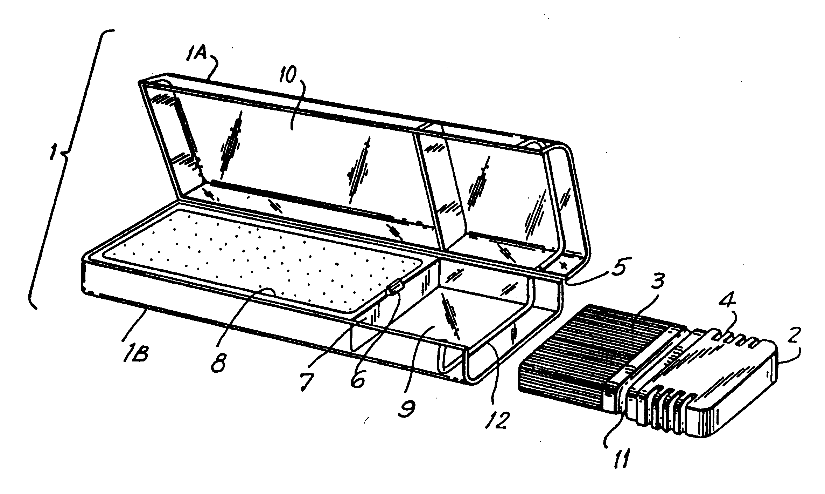

The drawing illustrates the best mode presently known for carrying out the present invention.

Figure - An exploded view of the cosmetic case and applicator.

The Figure illustrates a cosmetic case and applicator in accordance with the present invention. All essential features are shown as well as certain optional ones.

The rectangular container 1 includes a top component 1A and a bottom component 1B, which are hinged along one long side (5). The container is divided into a first compartment 8 and a second compartment 9 by a transverse wall 7. The transverse wall is provided with a friction catch 6 which holds the top and bottom components together in the closed position. The first compartment (8) is designed to contain material to be dispensed such as personal care products including cosmetics. The second compartment (9) has one open side opposite the transverse wall (7). An optional feature which is illustrated is the mirrored surface 10 inside the first compartment.

The applicator 2 is substantially rectangular and is designed to fit into the second compartment 9 with a brush or sponge end 3 contained entirely within the compartment and a handle 4 extending through the open side of the compartment. Rotation of the extending handle will exert sufficient pressure to release the friction catch and open the container.

Two other optional features which are illustrated are a raised ridge 12 in the second compartment designed to fit into an indentation 11 in the applicator handle. Although a brush is illustrated, a person skilled in the field of cosmetic packaging will appreciate that other delivery surfaces such as a sponge or puff can be employed with equal success and the choice will depend on the material to be dispersed.

A container of this type can be usefully employed to dispense a variety of personal care products such as shoe polish and all types of cosmetics. In particular, products such as blusher, compressed powder and eye shadow are especially suited for such a container and applicator.

## Claims

1. A container (1) and an applicator (2) consisting of a brush or a sponge (3) for dispensing the contents of the container and a handle (4),
the container being substantially rectangular and comprising top (1A) and bottom (1B) congruent components, said components being hinged along one side (5);
the container being divided into a pair of rectangular compartments (8, 9) by a wall (7) transverse to said hinged side (5), the first compartment (8) forming a closed compartment for containing a substance to be dispensed by the applicator, the second compartment (9) being open at its end opposite said transverse wall (7) and said components (1A) and (1B) being lockingly engaged to each other by a friction catch (6) on the inside of the side opposite the hinged side (5) or on said wall (7);
the applicator (2) being substantially rectangular and dimensioned to fit snugly within said second compartment (9) with said brush or sponge (3) confined completely within the second compartment (9) and said handle (4) being partially confined within the second compartment (9) and having a portion extending outwardly from said open end;
whereby rotation of said handle (4) relative to the container (1) will urge the top and bottom components (1A, 1B) apart and release the friction catch (6) to open the container.

2. A container and applicator according to claim 1, in which the top compartment (1A) has a mirrored surface.

3. A container and applicator according to claim 1, in which said first compartment (8) contains a personal care product.

4. A container and applicator according to any one of claims 1 to 3, in which the handle (4) has an indentation (11) and the second compartment (9) has a raised ridge (12) to engage said indentation.

## Patentansprüche

1. Behälter (1) und Aufträger (2) bestehend aus einer Bürste oder einem Schwamm (3) zum Verteilen des Inhalts des Behälters und einem Griff (4), wobei
- der Behälter im wesentlichen rechteckig ist, Deckel-(1A) und Bodenteil (1B) als kongruente Teile umfaßt und die Teile längs einer Seite (5) angelenkt sind,
- der Behälter in zwei rechteckige Fächer (8, 9) durch eine Wand (7) quer zur angelenkten Seite (5) unterteilt ist, das erste Fach (8) ein geschlossenes Fach zur Aufnahme einer Substanz ist, die durch den Aufträger verteilt werden soll, das zweite Fach (9) an seinem Ende gegenüber der querstehenden Wand (7) offen ist und die Teile (1A) und (1B) sperrend ineinandergreifen durch eine Reibungssperre (6) auf der Innenseite der Seite gegenüber der angelenkten Seite (5) oder an der Wand (7),
- der Aufträger (2) im wesentlichen rechteckig ist und solche Maße hat, daß er bequem in das zweite Fach (9) mit der Bürste oder dem Schwamm (3) paßt, die vollständig in dem zweiten Fach (9) eingegrenzt sind und der Griff (4) teilweise in dem zweiten Fach (9) eingegrenzt ist und einen Abschnitt hat, der von dem offenen Ende nach außen übersteht, und wobei
- die Drehung des Griffes (4) relativ zum Behälter (1) die Deckel- und Bodenteile (1A, 1B) auseinanderdrängt und die Reibungssperre (6) löst, um den Behälter zu öffnen.

2. Behälter und Aufträger nach Anspruch 1,
in dem das Deckelfach (1A) eine verspiegelte Oberfläche hat.

3. Behälter und Aufträger nach Anspruch 1,
in dem das erste Fach (8) ein Pflegeprodukt zum persönlichen Gebrauch enthält.

4. Behälter und Aufträger nach einem der Ansprüche 1 bis 3,
in dem der Griff (4) eine Vertiefung (11) und das zweite Fach (9) eine vorstehende Rippe (12) aufweist, um in diese Vertiefung einzugreifen.

## Revendications

1. Récipient (1) et applicateur (2) constitué d'une brosse ou d'une éponge (3) servant à appliquer le contenu du récipient, ainsi qu'une poignée (4),
le récipient étant en substance rectangulaire et comprenant un composant de tête (1A) et un composant de base (1B) de formes complémentaires, lesdits composants étant reliés par une charnière le long d'un de leurs côtés (5);
le récipient étant divisé en une paire de compartiments rectangulaires (8, 9) par une paroi (7) transversale audit côté à charnière (5), le premier compartiment (8) formant un compartiment fermé destiné à recevoir une substance à appliquer à l'aide de l'applicateur, le second compartiment (9) étant ouvert à son extrémité opposée à ladite paroi transversale (7), lesdits composants (1A) et (1B) étant accrochés l'un à l'autre à fermeture par un arrêt à friction (6) situé à l'intérieur du côté opposé au côté à charnière (5), ou sur ladite paroi (7);
l'applicateur (2) étant en substance rectangulaire et dimensionné de manière à s'adapter étroitement audit second compartiment (9), ladite brosse ou éponge (3) étant complètement enfermée dans le second compartiment (9), et ladite poignée (4) étant partiellement enfermée dans le second compartiment (9) et possédant une partie débordant à l'extérieur de ladite extrémité ouverte;
tandis que la rotation de ladite poignée (4) par rapport au récipient (1) écartera le composant de tête (1A) et le composant de base (1B) l'un de l'autre et libèrera l'arrêt à friction (6) pour ouvrir le récipient.

2. Récipient et applicateur selon la revendication 1, dans lequel le compartiment de tête (1A) possède une surface de miroir.

3. Récipient et applicateur selon la revendication 1, dans lequel ledit premier compartiment (8) contient un produit de soin personnel.

4. Récipient et applicateur selon l'une quelconque des revendications 1 à 3, dans lequel la poignée (4) possède une rainure (11) et le second compartiment (9) possède une nervure (12) destinée à accrocher ladite rainure.
